# EUROPÄISCHE PATENTSCHRIFT

(11) **EP 1 868 756 B1**
(45) Veröffentlichungstag und Bekanntmachung des Hinweises auf die Patenterteilung: **25.05.2011**
(21) Anmeldenummer: 06704768.8
(22) Anmeldetag: 31.03.2006
(51) Int. Cl.: B23B 29/04

(54) **WERKZEUGAUFBAU**
TOOL STRUCTURE
STRUCTURE D'OUTIL

(30) Priorität: 05.04.2005 AT 20305 U
(43) Veröffentlichungstag der Anmeldung: 26.12.2007
(73) Patentinhaber: CERATIZIT Austria Gesellschaft m.b.H., 6600 Reutte /Tirol (AT)
(72) Erfinder: MAIER, Johann, A-6600 Pflach (AT); KERLE, Siegfried, F., A-6671 Rieden 2 (AT); REICH, Eduard, A-6654 Holzgau (AT); SCHURDA, Einar, A-6632 Ehrwald (AT)
(86) Internationale Anmeldenummer: PCT/AT2006/000131
(87) Internationale Veröffentlichungsnummer: WO 2006/105564

(56) Entgegenhaltungen:
- EP-A- 1 243 365
- EP-A1- 0 294 348
- EP-A1- 0 385 280

## Beschreibung

Die Erfindung betrifft einen Werkzeugaufbau mit einer Längsachse A, bestehend aus einem ersten Teil mit einem Endabschnitt, der im Querschnitt senkrecht zur Längsachse A symmetrisch, im Wesentlichen oval mit einer Symmetrieachse in Richtung einer maximalen Höhe h und einer Symmetrieachse in Richtung einer maximalen Breite b, ausgeführt ist, wobei h größer b ist, einem zweiten Teil mit einer Ausnehmung die zur Aufnahme des Endabschnittes über gegenseitige Kontaktflächen vorgesehen ist und mindestens einem Spannmittel zum gegenseitigen Verklemmen der Teile.

Einen Werkzeug aufbau dieser Art ist z.B. aus EP-A-1 243365 bekannt.

Derartige Werkzeugaufbauten werden insbesondere bei der Zerspanung von Metallen häufig verwendet und sind in den unterschiedlichsten Ausführungen bekannt. So wird häufig ein den Schneideinsatz tragender Arbeitskopf mit einer Werkzeugaufnahme verbunden, wodurch die Verwendung von vielen unterschiedlichen Werkzeugköpfen auf ein und derselben Werkzeugaufnahme ermöglicht wird und somit modulare Werkzeugsysteme geschaffen werden.

Andere Werkzeugaufbauten dieser Art sind beispielsweise in der WO 94/07637 oder in der EP 0 636 055 A1 beschrieben. Beiden Ausführungen dieser Werkzeugaufbauten ist gemeinsam, dass die Außenkontur der einzelnen Werkzeugteile im Wesentlichen kreisförmig ist, wodurch insbesondere bei Werkzeugen für die Innenbearbeitung, der für die Bearbeitung in Richtung der auftretenden Hauptschnittkräfte zur Verfügung stehende Raum nicht optimal genutzt wird. Dadurch leidet die Stabilität der Werkzeuge in erheblichem Maße. Ein weiterer Nachteil der Werkzeuge entsprechend der WO 94/07637 ist der konstruktiv sehr aufwendig ausgeführte Mechanismus zum sicheren lösbaren Verspannen der einzelnen Werkzeugteile.

Eine weitere in der Praxis häufig vorkommende Ausgestaltung von teilbaren Schneidwerkzeugen ist bei Bohrstangen bekannt, wo der Endabschnitt der Bohrstange in eine geeignete Bohrstangenaufnahme eingeführt und dort verspannt wird. Bei den meisten bekannten Ausführungen dieser Art ist der Bohrstangenschaft kreisförmig mit einer entsprechend gestalteten Ausnehmung der Bohrstangenaufnahme ausgeführt. Wichtig ist dabei, dass der Bohrstangenschaft in einer genau festgelegten radialen Position in der Bohrstangenaufnahme festgelegt wird, um die Schneide am anderen Ende der Bohrstange optimal zu positionieren.

Um dies zu gewährleisten ist der Bohrstangenschaft an der Oberseite in der Regel mit einer ebenen Fläche abgeflacht, auf welche die Enden mehrerer in der Bohrstangenaufnahme positionierter Klemmschrauben zur Fixierung der Bohrstange einwirken. Zum Einschieben des Bohrstangenschaftes in die Bohrstangenaufnahme muss jedoch ein gewisses Spiel vorhanden sein, wodurch es beim Festziehen der Klemmschrauben zu einem Verkanten der Bohrstange und damit einer nicht lagerichtigen Positionierung der Schneidkanten kommen kann. Weiters ist es von Nachteil, dass die Bohrstange nur in dem den Klemmschrauben gegenüberliegenden Bereich in der Bohrstangenaufnahme zur Anlage kommt. In den übrigen Bereichen ist zwischen Bohrstange und Bohrstangenaufnahme Spiel vorgesehen, wodurch es zu Vibrationen bei der Bearbeitung kommen kann.

Um eine lagerichtige Positionierung der Bohrstange in der Bohrstangenaufnahme zu erreichen, wurde entsprechend der EP 0 385 280 B1 vorgeschlagen, Bohrstangen an ihrem Endabschnitt zur Fixierung in der Bohrstangenaufnahme mit einem aus dem Umfang des Schaftes seitlich radial vorstehenden Vorsprung zu versehen. Die Ausnehmung der Bohrstange ist dieser Form entsprechend angepasst, wodurch eine lagerichtige Positionierung der Bohrstange in der Bohrstangenaufnahme erreicht wird. Der Rest der Bohrstange außerhalb des Endabschnittes ist wiederum im Wesentlichen kreisförmig ausgeführt, wodurch der eingangs beschriebene Nachteil in Bezug auf den nicht optimal ausgenutzten, zur Verfügung stehenden Raum bei der Innenbearbeitung von Bohrungen nach wie vor vorhanden ist.

Die DE 27 13 529 A1 beschreibt eine Bohrstange, deren Schaftquerschnitt zumindest in dem Bereich der sich zur Innenbearbeitung in der Bohrung befindet, mit einem etwa elliptischen Querschnitt versehen ist. Dadurch wird erreicht, dass die Bohrstange bei der Bearbeitung in Bohrungen die optimale Raumausnutzung, verbunden mit einer hervorragenden Stabilität aufweist. Zum Einspannen der Bohrstange in einer geeigneten Bohrstangenaufnahme wird jedoch vorgeschlagen, das zum Einspannen vorgesehene Ende entweder einstückig kreisförmig oder quadratisch auszugestalten oder mit einer entsprechend geformten Spannhülse zu versehen, welche über den elliptischen Schaft geschoben wird, um wieder den gewünschten kreisförmigen oder quadratischen Querschnitt zur Einführung in die Bohrstangenaufnahme zu erhalten. Die Idee den ellipsenförmigen Querschnitt direkt zur Aufnahme in der Bohrstangenaufnahme vorzusehen, ist dieser Vorveröffentlichung nicht zu entnehmen.

Die EP 0 294 348 B1 beschreibt einen Werkzeugaufbau, bei dem die einzelnen Werkzeugkomponenten unter anderem über einen oval geformten Vorsprung, der in eine entsprechend geformte Aussparung eingreift, miteinander verbunden werden. Der Vorsprung und die Aussparung sind dabei in der Längsachse des Werkzeugaufbaues konisch zusammenlaufend ausgeführt. Darüber hinaus sind der Vorsprung oder die Aussparung flexibel ausgeführt. Beim Verklemmen der einzelnen Werkzeugteile gegeneinander durch Verschieben der Werkzeugteile in Richtung der Längsachse zueinander erfolgt der gegenseitige Kontakt der einzelnen Werkzeugteile über den gesamten Umfang von Vorsprung und Ausnehmung. Der Nachteil dabei ist, dass derartige Kontaktflächen extrem genau sein müssen und mit einem hohen Fertigungsaufwand verbunden sind.

Die Aufgabe der vorliegenden Erfindung ist es daher einen Werkzeugaufbau zu schaffen, der bei der Innenbearbeitung Vorteile in der Raumausnutzung bietet und der eine einfach zu fertigende, passgenaue und stabile Verbindung der einzelnen Werkzeugkomponenten ermöglicht.

Erfindungsgemäß wird dies dadurch gelöst, dass die gegenseitigen Kontaktflächen mit oder ohne Einbeziehung der Kontaktfläche eines Spannmittels, im Querschnitt gesehen, auf jeweils vier voneinander beabstandete, in etwa in Richtung der Längsachse A verlaufende Flächenabschnitte beschränkt sind, welche in Bezug auf den Umfang des Endabschnittes derart symmetrisch angeordnet sind, dass der Mittelpunkt M der Verbindungsgeraden des Anfangs- und Endpunktes des jeweiligen Flächenabschnittes von der Symmetrieachse in Richtung der maximalen Höhe h einen Normalabstand b₁ und von der Symmetrieachse in Richtung der maximalen Breite b einen Normalabstand h₁ aufweist, wobei h₁ größer ist als b₁. Die ovale Querschnittsform mit den vier symmetrisch am Umfang angeordneten Kontaktflächen am Werkzeugteil mit dem Endabschnitt ermöglicht eine einfache spielfreie radiale Positionierung im Werkzeugteil mit der Ausnehmung. Gleichzeitig kann diese ovale Querschnittsform auch auf die Außenkonturen der Abschnitte des Werkzeugteiles mit dem Endabschnitt übertragen werden, der bei der Innenbearbeitung innerhalb der zu bearbeitenden Bohrung liegt. Dadurch wird der in der Bohrung für das Werkzeug maximal zur Verfügung stehende Platz optimal genutzt. Gegenüber runden Außenkonturen kann in der Praxis in der Richtung der maximal auftretenden Schnittkräfte dadurch je nach Auslegung des Werkzeuges eine um etwa 10 bis 50 Prozent größere Bauhöhe des Werkzeuges erreicht werden, wodurch die Stabilität der Verbindung und des Werkzeuges insgesamt merklich verbessert wird. Für die gebräuchlichsten Werkzeuge wird der erzielbare Gewinn an Bauhöhe bei etwa 25 Prozent liegen. Besonders wichtig ist, dass die einzelnen gegenseitigen Kontaktflächen entlang des Umfanges von Endabschnitt und Ausnehmung in Bezug auf die einzelnen Symmetrieachsen zwar symmetrisch, aber jeweils mit unterschiedlichem Abstand von den zwei Symmetrieachsen angeordnet sind. Dadurch ergibt sich beim gegenseitigen Verklemmen der Werkzeugteile durch geeignete Spannmittel eine optimale Kraftverteilung auf die einzelnen Kontaktflächen.

Der erfindungsgemäße Werkzeugaufbau kann für die unterschiedlichsten Werkzeugkomponenten angewendet werden. So kann insbesondere ein Schneidwerkzeug direkt oder auch über ein Zwischenstück bzw. einen Adapter mit einer Werkzeugaufnahme oder mit der Maschinenspindel über diesen Werkzeugaufbau verbunden werden.

Besonders vorteilhaft ist es, wenn die ovale Außenkontur des Endabschnittes des zu verbindenden Werkzeugteiles durch zwei Kreisbögen gebildet wird, deren Mittelpunkte auf der Symmetrieachse in Richtung der maximalen Breite b, mit gleichem Abstand beidseits vom Schnittpunkt mit der Symmetrieachse in Richtung der maximalen Höhe h entfernt liegen. Durch eine derartige Ausgestaltung wird eine besonders einfache Fertigung der ovalen Außenkontur ermöglicht.

Von Vorteil ist es auch, wenn die einzelnen Kontaktflächen der zu verbindenden Werkzeugteile jeweils als eine in Richtung der Längsachse der Werkzeugteile verlaufende ebene Fläche ausgeführt sind, die dann besonders leicht gefertigt werden können. Auf diese Weise wird eine hochgenaue Passung der beiden Werkzeugteile erreicht.

Beim Werkzeugteil mit der Ausnehmung zur Aufnahme des Werkzeugteiles mit dem ovalen Endabschnitt ist es lediglich erforderlich, dass diese vier Kontaktflächen den vier Kontaktflächen auf der Außenkontur des Endabschnittes exakt angepasst sind. Bei der Ausgestaltung der restlichen Flächen ist es von Vorteil, wenn diese mit geringem Spiel der entsprechenden Außenkontur des Endabschnittes angepasst sind, um die maximale Festigkeit der Aufnahme zu gewährleisten.

Wenn der erfindungsgemäße Werkzeugaufbau zur Verbindung von Werkzeugteilen eingesetzt wird, bei denen der Endabschnitt gegenüber dem restlichen Werkzeugabschnitt mit verminderten Außenabmessungen abgesetzt ist, wie es beispielsweise bei modularen Werkzeugsystemen der Fall ist, ist es von Vorteil, wenn beim Werkzeugteil mit dem Endabschnitt auch der Bereich außerhalb des Endabschnittes und beim Werkzeugteil mit der Ausnehmung auch die Außenkontur dieses Teiles der Außenkontur des Endabschnittes weitgehend angepasst ist.
Auf diese Weise wird auch bei modularen Werkzeugsystemen eine optimale Ausnutzung des zur Verfügung stehenden Platzes bei der Innenbearbeitung für das Werkzeug erreicht.

Ideal ist es, wenn der erfindungsgemäße Werkzeugaufbau bei der Verbindung von einer Bohrstange mit der entsprechenden Bohrstangenaufnahme eingesetzt wird, wobei dann der ovale Querschnitt so gewählt wird, dass die Symmetrieachse in Richtung der maximalen Höhe h etwa senkrecht zur Werkzeugbezugsebene Pᵣ durch jeweils gleiche ausgewählte Schneidenpunkte senkrecht zur angenommenen Schnittrichtung entsprechend DIN 6581 angeordnet ist. Dadurch werden bei einem Werkzeug das hinsichtlich Stabilität bei der Zerspanung besonders anfällig ist, optimale Verhältnisse, verbunden mit einer leichten präzisen, gegenseitigen Verschiebbarkeit der beiden Werkzeugteile erreicht.

Wenn der erfindungsgemäße Werkzeugaufbau zwischen Bohrstange und Bohrstangenaufnahme vorgesehen wird, ist es vorteilhaft, die gegenseitige Verspannung der Werkzeugteile dadurch zu erreichen, dass die Bohrstangenaufnahme durch einen in die Ausnehmung mündenden Schlitz in der Mitte zwischen zwei Kontaktflächen elastisch ausgeführt ist, wobei die elastisch verbundenen Abschnitte durch eine Spannschraube zusammenpressbar sind.

Eine weitere vorteilhafte Möglichkeit Bohrstange und Bohrstangenaufnahme miteinander zu verspannen ist die Verwendung eines in der Bohrstangenaufnahme verstellbaren Klemmteiles der über eine Spannschraube gegen eine der Kontaktflächen am Endabschnitt der Bohrstange verspannt wird.

Wenn der erfindungsgemäße Werkzeugaufbau bei rotierenden oder modularen Werkzeugsystemen zum Einsatz kommt ist es vorteilhaft, den Endabschnitt und die Ausnehmung in der Längsachse konisch zusammenlaufend auszuführen und die Verspannung der Werkzeugteile durch gegenseitige Lageveränderung von Endabschnitt und Ausnehmung in Richtung Längsachse der Werkzeugteile vorzunehmen. Bei einer derartigen Verbindung der Werkzeugteile ist es von Vorteil, wenn der Werkzeugteil mit dem Endabschnitt und der Werkzeugteil mit der Ausnehmung zusätzlich gegenseitige Plananlageflächen aufweisen, welche die Stabilität der Verbindung weiter erhöhen.

Die gegenseitige Lageveränderung von Endabschnitt und Ausnehmung in Richtung der Längsachse der Werkzeugteile lässt sich auf einfache Weise durch eine axial angeordnete Spannschraube mit zwei Gewindeabschnitten unterschiedlicher Steigung erreichen. Aber ebenso sind automatische Möglichkeiten wie hydraulisch oder mechanisch verstellbare Spannstangen oder auch andere Spannsysteme denkbar.

Im Folgenden wird die Erfindung an Hand von Figuren näher erläutert.

Es zeigen:
- Figur 1: einen erfindungsgemäßen Werkzeugaufbau in perspektivischer Ansicht im getrennten Zustand
- Figur 2: den erfindungsgemäßen Werkzeugaufbau nach Figur 1 im verbundenen Zustand im Querschnitt
- Figur 3: den erfindungsgemäßen Werkzeugaufbau nach Figur 1 im verbundenen Zustand im Längsschnitt
- Figur 4: die Variante eines erfindungsgemäßen Werkzeugaufbaus in perspektivischer Ansicht
- Figur 5: den erfindungsgemäßen Werkzeugaufbau nach Figur 4 im Querschnitt
- Figur 6: eine weitere Variante eines erfindungsgemäßen Werkzeugaufbaus ähnlich dem in Figur 4 im Querschnitt

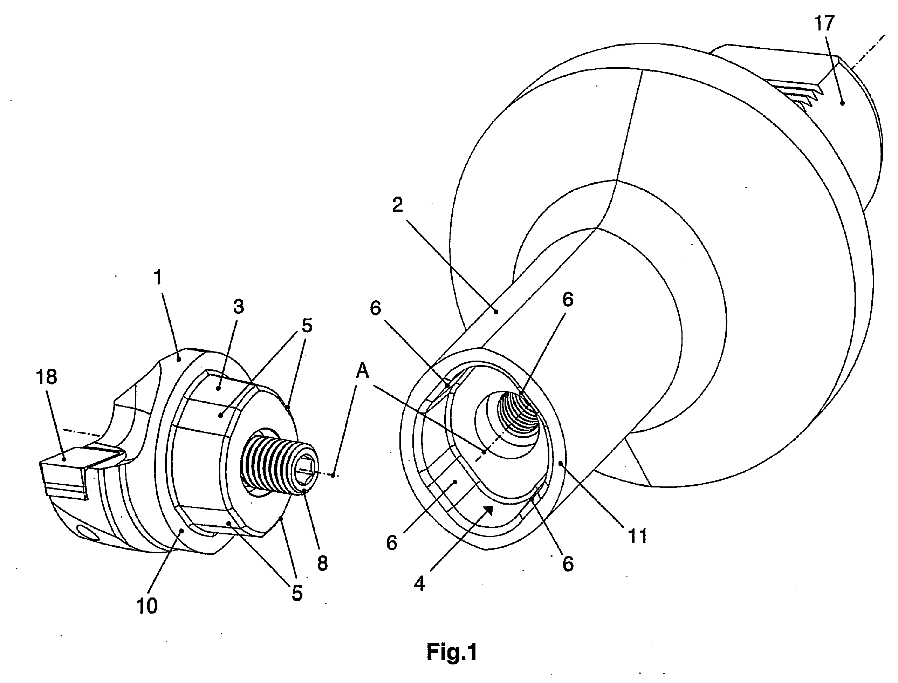

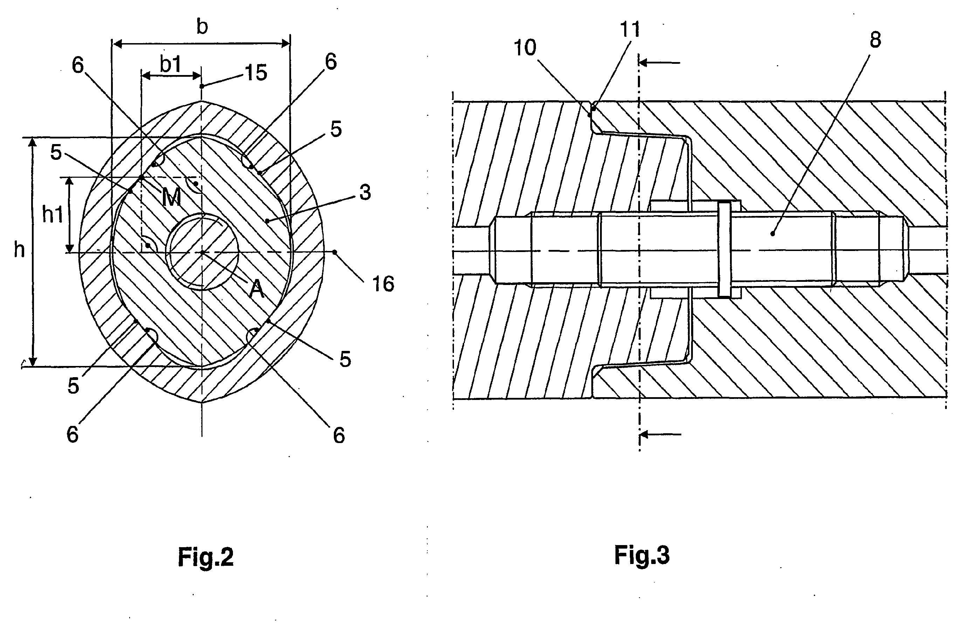

In den Figuren 1 bis 3 ist ein erfindungsgemäßer Werkzeugaufbau in Form eines teilbaren Drehwerkzeuges mit einem Werkzeugkopf -1- mit einer auswechselbaren Wendeschneidplatte -18- und einer Werkzeugkopfaufnahme -2- zur Aufnahme des Werkzeugkopfes -1- dargestellt. Der Werkzeugkopf -1- weist einen Endabschnitt -3- mit einem im Querschnitt senkrecht zur Werkzeuglängsachse A symmetrischen, im Wesentlichen ovalen Querschnitt auf, der in Richtung der Längsachse A des Werkzeuges geringfügig konisch zusammenläuft. Der Endabschnitt -3- weist eine Symmetrieachse -15-in Richtung der maximalen Höhe h des Querschnittes und senkrecht dazu eine Symmetrieachse -16- in Richtung der maximalen Breite b des Querschnittes auf. Der Endabschnitt -3- weist weiters am Umfang vier symmetrisch angeordnete, voneinander beabstandete ebene Kontaktflächen -5- auf, die in etwa in Richtung der Längsachse A des Werkzeuges verlaufen. Die Kontaktflächen -5- sind dabei derart angeordnet, dass sie jeweils von der Symmetrieachse -15-, im Querschnitt gesehen, einen Normalabstand b₁ und von der Symmetrieachse -16- einen Normalabstand h₁ aufweisen, wobei der Abstand h₁ größer ist als der Abstand b₁. Diese Abstände werden dabei unabhängig davon, ob die Kontaktflächen -5- eben zusammengesetzt oder kurvenförmig verlaufen vom Mittelpunkt M der Verbindungsgeraden aus festgelegt, welche Anfangs- und Endpunkt der jeweiligen Kontaktfläche -5-verbindet. Außerhalb des Endabschnittes -3- weist der Werkzeugkopf -1- eine Außenkontur auf, die als vergrößerte konzentrische Kurvenform in etwa der Außenkontur des Endabschnittes -3- angepasst ist. Dadurch wird eine Stufe mit einer Fläche -10- gebildet, die zur Plananlage mit einer entsprechenden Gegenfläche -11- der Werkzeugkopfaufnahme -2- dient. Die Werkzeugkopfaufnahme -2- ist an einem Ende mit einer Ausnehmung -4- zur Aufnahme des Endabschnittes -3 des Werkzeugkopfes -1- und am anderen Ende mit einem Endabschnitt -17- zur Befestigung in einer Werkzeugaufnahme ausgeführt. Die Ausnehmung -4- weist vier symmetrisch am Umfang angeordnete Kontaktflächen -6- auf, welche bei zusammengesetztem Werkzeug mit den Kontaktflächen -5- des Endabschnittes -3- des Werkzeugkopfes -1- in Eingriff stehen. Außerhalb dieser Kontaktflächen -6- ist die Form der Ausnehmung -4- mit geringfügigem Spiel in etwa der Außenkontur des Endabschnittes -3- angepasst. Die Außenkontur der Werkzeugkopfaufnahme -2- im Bereich der Ausnehmung -4- und einem weiteren daran anschließenden Abschnitt ist der Außenkontur des vorderen Bereiches des Werkzeugkopfes -1- angepasst, wodurch eine Stirnfläche -11- gebildet wird, die zur Plananlage an der Gegenfläche -10- des Werkzeugkopfes -1- dient. Mit einer Spannschraube -8-, die zwei Gewindeabschnitte mit unterschiedlicher Steigung aufweist, werden Werkzeugkopf -1- und Werkzeugkopfaufnahme -2- bis zur Plananlage der Flächen -10- und -11- miteinander verspannt.

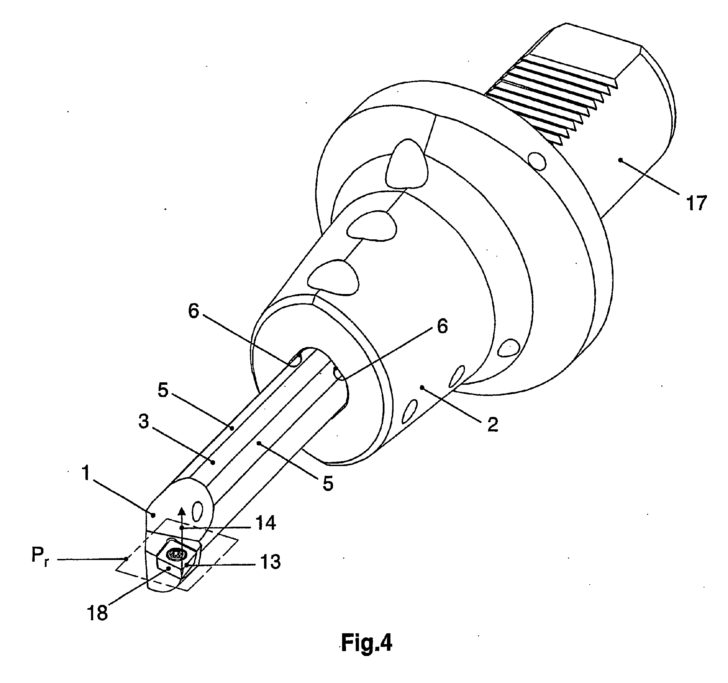

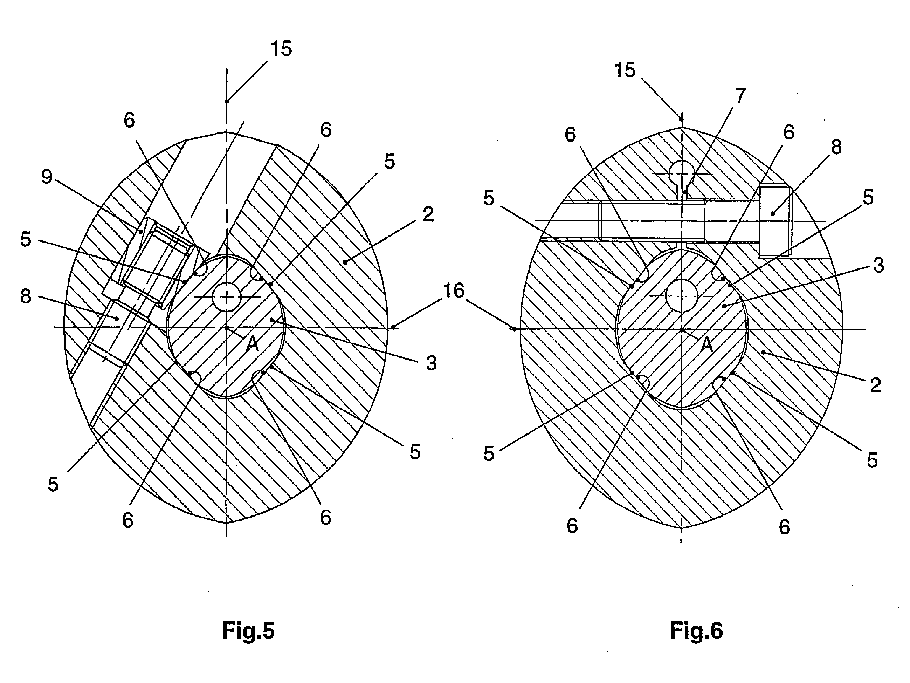

Die Figuren 4 bis 6 zeigen einen erfindungsgemäßen Werkzeugaufbau in Form einer Bohrstange -1- und einer Bohrstangenaufnahme -2-. In diesem Fall weist die Bohrstange -1- über ihre gesamte Länge mit Ausnahme des die Wendeschneidplatte -18- tragenden Kopfes einen symmetrischen, im Wesentlichen ovalen gleich bleibenden Querschnitt mit den erfindungsgemäß angeordneten Kontaktflächen -5- auf. Die Symmetrieachse -15- in Richtung der maximalen Höhe h der Bohrstange ist dabei senkrecht zur Werkzeugbezugsebene Pᵣ durch jeweils gleiche, ausgewählte Schneidenpunkte -13- der Wendeschneidplatte -18- senkrecht zur angenommenen Schnittrichtung -14- entsprechend DIN 6581 angeordnet. Auf diese Weise wird bei optimaler Raumausnutzung eine verbesserte Stabilität der Bohrstange erreicht. Die Bohrstangenaufnahme -2- weist eine entsprechend angepasste Ausnehmung -4- mit Kontaktflächen -6- auf. Die Bohrstange -1- kann in der Bohrstangenaufnahme -2- innerhalb eines weiten Bereiches verschoben und in der gewünschten Position festgeklemmt werden. Die sichere Verspannung der beiden Teile gegeneinander wird dabei durch die Kontaktfläche -6- eines Spannkeiles -9- erreicht, der durch eine Spannschraube -8- gegen eine Kontaktfläche -5- der Bohrstange -1- gezogen wird, was in Figur 5 dargestellt ist.

Eine Variante für eine Möglichkeit der Fixierung der Bohrstange -1- in der Bohrstangenaufnahme -2- ist in der Figur 6 dargestellt. In dieser Ausführung ist die Bohrstangenaufnahme -4- durch einen Schlitz -7- zwischen zwei Kontaktflächen -6- elastisch mit etwas Spiel gegenüber dem Endabschnitt -3- der Bohrstange -1- ausgeführt. Die sichere Verklemmung von Bohrstange -1- und Bohrstangenaufnahme -2- erfolgt durch Zusammenpressen der durch den Schlitz -7- elastisch verbundenen Abschnitte durch die Spannschraube -8-.

## Patentansprüche

1. Werkzeugaufbau mit einer Längsachse A, bestehend aus einem ersten Teil (1) mit einem Endabschnitt (3), der im Querschnitt senkrecht zur Längsachse A symmetrisch, mit einer Symmetrieachse (15) in Richtung einer maximalen Höhe h und einer Symmetrieachse (16) in Richtung einer maximalen Breite b, ausgeführt ist, wobei h größer b ist, einem zweiten Teil (2) mit einer Ausnehmung (4) die zur Aufnahme des Endabschnittes (3) über gegenseitige Kontaktflächen (5 und 6) vorgesehen ist und mindestens einem Spannmittel (8,9) zum gegenseitigen Verklemmen der Teile(1 und 2), **dadurch gekennzeichnet, dass** der Endabschnitt (3) einen im Wesentlichen ovalen Querschnitt hat, und dass die gegenseitigen Kontaktflächen (5 und 6) mit oder ohne Einbeziehung der Kontaktfläche eines Spannmittels (9), im Querschnitt gesehen, auf jeweils vier, alle voneinander beabstandete, in etwa in Richtung der Längsachse A verlaufende Flächenabschnitte beschränkt sind, welche in Bezug auf den Umfang des Endabschnittes (3) derart symmetrisch angeordnet sind, dass der Mittelpunkt M der Verbindungsgeraden des Anfangs- und Endpunktes des jeweiligen Flächenabschnittes von der Symmetrieachse (15) einen Normalabstand b₁ und von der Symmetrieachse (16) einen Normalabstand h₁ aufweist, wobei h₁ größer ist als b₁.

2. Werkzeugaufbau nach Anspruch 1, **dadurch gekennzeichnet, dass** die Außenkontur des Endabschnittes (3), im Querschnitt gesehen, durch zwei Kreisbögen gebildet ist, deren Mittelpunkte auf der Symmetrieachse (16) mit gleichem Abstand beidseits vom Schnittpunkt mit der Symmetrieachse (15) entfernt liegen.

3. Werkzeugaufbau nach Anspruch 1 oder 2, **dadurch gekennzeichnet, dass** die einzelnen Kontaktflächen (5,6) jeweils als ebene Flächen ausgeführt sind.

4. Werkzeugaufbau nach einem der Ansprüche 1 bis 3, **dadurch gekennzeichnet, dass** die Ausnehmung (4), außerhalb der Kontaktflächen (6), der Außenkontur des Endabschnittes (3) mit Spiel angepasst ist.

5. Werkzeugaufbau nach einem der Ansprüche 1 bis 4, **dadurch gekennzeichnet, dass** beim Teil (1) mit dem Endabschnitt (3) auch der Bereich außerhalb des Endabschnittes (3) und beim Teil (2) mit der Ausnehmung (4) auch die Außenkontur dieses Teiles in etwa der Außenkontur des Endabschnittes (3) angepasst ist.

6. Werkzeugaufbau nach einem der Ansprüche 1 bis 5, **dadurch gekennzeichnet, dass** der Teil (1) mit dem Endabschnitt (3) eine Bohrstange und der Teil (2) mit der Ausnehmung (4) eine Bohrstangenaufnahme ist, wobei die Symmetrieachse (15) etwa senkrecht zur Werkzeugbezugsebene Pᵣ durch jeweils gleiche ausgewählte Schneidenpunkte (13) senkrecht zur angenommenen Schnittrichtung (14) entsprechend DIN 6581, angeordnet ist.

7. Werkzeugaufbau nach Anspruch 6, **dadurch gekennzeichnet, dass** die gegenseitige Verklemmung der Teile (1 und 2) dadurch erreicht wird, dass die Bohrstangenaufnahme durch einen in die Ausnehmung (4) mündenden Schlitz (7) in der Mitte zwischen zwei Kontaktflächen (6) elastisch ausgeführt ist, wobei die elastisch verbundenen Abschnitte durch eine Spannschraube (8) zusammenpressbar sind.

8. Werkzeugaufbau nach Anspruch 6, **dadurch gekennzeichnet, dass** die gegenseitige Verklemmung der Teile (1 und 2) durch einen in der Bohrstangenaufnahme verstellbaren Klemmkeil (9) erreicht wird, der über eine Spannschraube (8) gegen eine Kontaktfläche (5) am Endabschnitt (3) verspannt wird.

9. Werkzeugaufbau nach einem der Ansprüche 1 bis 6, **dadurch gekennzeichnet, dass** der Endabschnitt (3) und die Ausnehmung (4) in der Längsachse A des Werkzeugaufbaues konisch zusammenlaufend ausgeführt sind und die gegenseitige Verklemmung der Teile (1 und 2) durch gegenseitige Lageveränderung von Endabschnitt (3) und Ausnehmung (4) in Richtung der Längsachse A erfolgt.

10. Werkzeugaufbau nach Anspruch 9, **dadurch gekennzeichnet, dass** der Teil (1) mit dem Endabschnitt (3) und der Teil (2) mit der Ausnehmung (4) zusätzlich gegenseitige Plananlageflächen (10,11) aufweisen.

11. Werkzeugaufbau nach einem der Ansprüche 9 oder 10, **dadurch gekennzeichnet, dass** die gegenseitige Lageveränderung von Endabschnitt (3) und Ausnehmung (4) über eine axiale Spannschraube (8) mit zwei Gewindeabschnitten mit unterschiedlicher Steigung erreicht wird.

12. Werkzeugkomponente eines Werkzeugaufbaues mit einer Längsachse A, welche ein Werkzeug für die spanabhebende Bearbeitung, ein Adapter für ein Werkzeug, oder eine Aufnahme für ein Werkzeug ist und welche mit einem Endabschnitt (3) versehen ist, der im Querschnitt senkrecht zur Längsachse A symmetrisch, mit einer Symmetrieachse (15) in Richtung einer maximalen Höhe h und einer Symmetrieachse (16) in Richtung einer maximalen Breite b ausgeführt ist, wobei h größer b ist, **dadurch gekennzeichnet, dass** der Endabschnitt (3) im Querschnitt gesehen, im Wesentlichen ovalen Form hat und vier voneinander beabstandete, in etwa in Richtung der Längsachse A verlaufende Flächenabschnitte als Kontaktflächen (5) aufweist, welche in Bezug auf den Umfang des Endabschnittes (3) derart symmetrisch angeordnet sind, dass der Mittelpunkt M der Verbindungsgeraden des Anfangs- und Endpunktes des jeweiligen Flächenabschnittes von der Symmetrieachse (15) einen Normalabstand b₁ und von der Symmetrieachse (16) einen Normalabstand h₁ aufweist, wobei h₁ größer ist als b₁.

13. Werkzeugkomponente eines Werkzeugaufbaues mit einer Längsachse A, welche ein Werkzeug für die spanabhebende Bearbeitung, ein Adapter für ein Werkzeug oder eine Aufnahme für ein Werkzeug ist und welche mit einer Ausnehmung (4) versehen ist, die im Querschnitt senkrecht zur Längsachse A symmetrisch mit einer Symmetrieachse (15) in Richtung einer maximalen Höhe h und einer Symmetrieachse (16) in Richtung einer maximalen Breite b ausgeführt ist, wobei h größer ist **dadurch gekennzeichnet, dass** die Ausnehmung (4) im Querschnitt gesehen im Wesentlichen ovalen Form hat und vier voneinander beabstandete, in etwa in Richtung der Längsachse A verlaufende Flächenabschnitte als Kontaktfläcen (6) aufweist, welche in Bezug auf den Umfang der Ausnehmung (4) derart symmetrisch angeordnet sind, dass der Mittelpunkt M der Verbindungsgeraden des Anfangs- und Endpunktes des jeweiligen Flächenabschnittes von der Symmetrieachse (15) einen Normalabstand b₁ und von der Symmetrieachse (16) einen Normalabstand h₁ aufweist, wobei h₁ größer ist als b₁.

## Claims

1. Tool structure having a longitudinal axis A, consisting of a first part (1) having an end section (3) which in cross section is designed to be symmetrical perpendicularly to the longitudinal axis A with an axis (15) of symmetry in the direction of a maximum height h and an axis (16) of symmetry in the direction of a maximum width b, h being greater than b, and of a second part (2) having a recess (4) which is provided for accommodating the end section (3) via mutual contact surfaces (5 and 6), and of at least one clamping means (8, 9) for the mutual clamping of the parts (1, 2), **characterized in that** the end section (3) has an essentially oval cross section and the mutual contact surfaces (5 and 6), with or without the inclusion of the contact surface of a clamping means (9), are restricted, as viewed in cross section, to in each case four spaced-apart surface sections which run approximately in the direction of the longitudinal axis A and which are arranged symmetrically with respect to the circumference of the end section (3) in such a way that the centre point M of the straight connecting line of the starting and end points of the respective surface section is at a normal distance b₁ from the axis (15) of symmetry and at a normal distance h₁ from the axis (16) of symmetry, h₁ being greater than b₁.

2. Tool structure according to Claim 1, **characterized in that** the outer contour of the end section (3), as viewed in cross section, is formed by two arcs of a circle, the centre points of which on the axis (16) of symmetry are at the same distance on both sides from the intersection with the axis (15) of symmetry.

3. Tool structure according to Claim 1 or 2, **characterized in that** the individual contact surfaces (5, 6) are each designed as flat surfaces.

4. Tool structure according to one of Claims 1 to 3, **characterized in that** the recess (4), outside the contact surfaces (6), is adapted with play to the outer contour of the end section (3).

5. Tool structure according to one of Claims 1 to 4, **characterized in that**, at the part (1) having the end section (3), the region outside the end section (3) and, at the part (2) having the recess (4), the outer contour of this part is also adapted approximately to the outer contour of the end section (3).

6. Tool structure according to one of Claims 1 to 5, **characterized in that** the part (1) having the end section (3) is a boring bar and the part (2) having the recess (4) is a boring bar receptacle, the axis (15) of symmetry being arranged approximately perpendicularly to the tool reference plane Pᵣ through in each case identical selected cutting-edge points (13) perpendicularly to the assumed cutting direction (14) in accordance with DIN 6581.

7. Tool structure according to Claim 6, **characterized in that** the mutual clamping of the parts (1 and 2) is achieved by the boring bar receptacle being designed to be elastic by means of a slot (7), opening into the recess (4), in the centre between two contact surfaces (6), wherein the elastically connected sections can be pressed together by a clamping screw (8).

8. Tool structure according to Claim 6, **characterized in that** the mutual clamping of the parts (1 and 2) is achieved by a clamping wedge (9) which is adjustable in the boring bar receptacle and which is restrained against a contact surface (5) on the end section (3) via a clamping screw (8).

9. Tool structure according to one of Claims 1 to 6, **characterized in that** the end section (3) and the recess (4) are designed to taper conically in the longitudinal axis A of the tool structure, and the mutual clamping of the parts (1 and 2) is effected by mutual change in position of the end section (3) and the recess (4) in the direction of the longitudinal axis A.

10. Tool structure according to Claim 9, **characterized in that** the part (1) having the end section (3) and the part (2) having the recess (4) additionally have mutual plane-parallel bearing surfaces (10, 11).

11. Tool structure according to either of Claims 9 and 10, **characterized in that** the mutual change in position of the end section (3) and the recess (4) is achieved via an axial clamping screw (8) having two thread sections with different pitch.

12. Tool component of a tool structure having a longitudinal axis A, which is a tool for machining, an adapter for a tool, or a receptacle for a tool and which is provided with an end section (3) which in cross section is designed to be symmetrical perpendicularly to the longitudinal axis A with an axis (15) of symmetry in the direction of a maximum height h and an axis (16) of symmetry in the direction of a maximum width b, h being greater than b, **characterized in that** the end section (3), as viewed in cross section, has an essentially oval shape and four spaced-apart surface sections, as contact surfaces (5), which run approximately in the direction of the longitudinal axis A and which are arranged symmetrically with respect to the circumference of the end section (3) in such a way that the centre point M of the straight connecting line of the starting and end points of the respective surface section is at a normal distance b₁ from the axis (15) of symmetry and at a normal distance h₁ from the axis (16) of symmetry, h₁ being greater than b₁.

13. Tool component of a tool structure having a longitudinal axis A, which is a tool for machining, an adapter for a tool, or a receptacle for a tool and which is provided with a recess (4) which in cross section is designed to be symmetrical perpendicularly to the longitudinal axis A with an axis (15) of symmetry in the direction of a maximum height h and an axis (16) of symmetry in the direction of a maximum width b, h being greater than b, **characterized in that** the recess (4), as viewed in cross section, has an essentially oval shape and four spaced-apart surface sections, as contact surfaces (6), which run approximately in the direction of the longitudinal axis A and which are arranged symmetrically with respect to the circumference of the recess (4) in such a way that the centre point M of the straight connecting line of the starting and end points of the respective surface section is at a normal distance b₁ from the axis (15) of symmetry and at a normal distance h₁ from the axis (16) of symmetry, h₁ being greater than b₁.

## Revendications

1. Structure d'outil à axe longitudinal A, se composant d'une première pièce (1) incluant un segment final (3) dont la section transversale perpendiculaire à l'axe longitudinal A, exécutée symétriquement, présente un axe de symétrie (15) dans la direction d'une hauteur maximale h et un axe de symétrie (16) dans la direction d'une largeur maximale b, où h est supérieure à b, d'une deuxième pièce (2) dans laquelle est ménagé un évidement (4) prévu pour loger le segment final (3) au moyen de surfaces de contact réciproques (5 et 6), et d'au moins un moyen de serrage (8 ,9) pour bloquer réciproquement les pièces (1 et 2),
**caractérisée en ce que**
la section transversale du segment final (3) est sensiblement ovale et **en ce que** chacune des surfaces de contact réciproques (5 et 6) est limitée en vue en section transversale, avec ou sans association de la surface de contact d'un moyen de serrage (9), à quatre segments de surfaces tous espacés les uns des autres, s'étendant à peu près dans la direction de l'axe longitudinal A, qui sont disposés symétriquement par rapport à la périphérie du segment final (3) d'une manière telle que le milieu M de chacune des droites qui relient les points initial et final de chaque segment de surface est à une distance normale b₁ de l'axe de symétrie (15) et une distance normale h₁ de l'axe de symétrie (16), où h₁ est supérieure à b₁.

2. Structure d'outil selon la revendication 1, **caractérisée en ce que** le contour externe du segment final (3) consiste, en vue en section transversale, en deux arcs de cercles dont les centres, situés sur l'axe de symétrie (16), sont équidistants du point d'intersection avec l'axe de symétrie (15), de part et d'autre de ce point.

3. Structure d'outil selon la revendication 1 ou 2, **caractérisée en ce que** chacune des surfaces de contact individuelles (5, 6) consiste en une surface plane.

4. Structure d'outil selon l'une quelconque des revendications précédentes, **caractérisée en ce que** l'évidement (4) est adapté de manière à ménager, en dehors des surfaces de contact (6), un certain jeu autour du contour externe du segment final (3).

5. Structure d'outil selon l'une quelconque des revendications précédentes, **caractérisée en ce que** tant la zone n'incluant pas le segment final (3), dans la pièce (1) pourvue du segment final (3), que le contour externe de la pièce (2), dans cette pièce comportant l'évidement (4), sont eux aussi à peu près adaptés au contour externe du segment final (3).

6. Structure d'outil selon l'une quelconque des revendications précédentes, **caractérisée en ce que** la pièce (1) comprenant le segment final (3) est une barre d'alésage et la pièce (2) présentant l'évidement (4) est un logement de barre d'alésage, l'axe de symétrie (15) étant disposé selon la norme industrielle allemande DIN 6581 perpendiculairement à la direction de coupe supposée (14) au moyen de points de coupe identiques sélectionnés (13), et à peu près perpendiculairement au plan de référence Pᵣ de l'outil.

7. Structure d'outil selon la revendication 6, **caractérisée en ce que** le blocage réciproque des pièces (1 et 2) résulte de ce que le logement de barre d'alésage est réalisé de façon élastique au moyen d'une fente (7) débouchant dans l'évidement (4) au milieu entre deux surfaces de contact (6), les segments connectés élastiquement pouvant être comprimés l'un contre l'autre par une vis de serrage (8).

8. Structure d'outil selon la revendication 6, **caractérisée en ce que** le blocage réciproque des pièces (1 et 2) est atteint au moyen d'une cale de blocage (9) mobile dans le logement de barre d'alésage qui est serrée contre une surface de contact (5) du segment final (3) au moyen d'une vis de serrage (8).

9. Structure d'outil selon l'une quelconque des revendications 1 à 6, **caractérisée en ce que** les tracés du segment final (3) et de l'évidement (4) sont des cônes de même ouverture centrés sur l'axe longitudinal A de la structure d'outil et que le blocage réciproque des pièces (1 et 2) résulte d'une modification réciproque des positions du segment final (3) et de l'évidement (4) dans la direction de l'axe longitudinal A.

10. Structure d'outil selon la revendication 9, **caractérisée en ce que** la pièce (1) à segment final (3) et la pièce (2) comportant l'évidement (4) présentent en outre des surfaces d'appui planes réciproques (10, 11).

11. Structure d'outil selon la revendication 9 ou 10, **caractérisée en ce que** la modification réciproque des positions du segment final (3) et de l'évidement (4) est effectuée par une vis axiale de serrage (8) à deux segments filetés de pas différents.

12. Composant d'outil d'une structure d'outil à axe longitudinal A qui est un outil d'usinage par enlèvement de copeaux, un adaptateur pour un outil ou un logement d'outil et qui inclut un segment final (3) dont la section transversale perpendiculaire à l'axe longitudinal A, exécutée symétriquement, présente un axe de symétrie (15) dans la direction d'une hauteur maximale h et un axe de symétrie (16) dans la direction d'une largeur maximale b, où h est supérieure à b, **caractérisé en ce que** la forme du segment final (3), en vue en section transversale, est sensiblement ovale et qu'il présente comme surfaces de contact (5) quatre segments de surfaces espacés les uns des autres, s'étendant à peu près dans la direction de l'axe longitudinal A, qui sont disposés symétriquement par rapport à la périphérie du segment final (3) d'une manière telle que le milieu M de chacune des droites qui relient les points initial et final de chaque segment de surface est à une distance normale b₁ de l'axe de symétrie (15) et une distance normale h₁ de l'axe de symétrie (16), où h₁ est supérieure à b₁.

13. Composant d'outil d'une structure d'outil à axe longitudinal A qui est un outil d'usinage par enlèvement de copeaux, un adaptateur pour un outil ou un logement d'outil et qui comporte un évidement (4) dont la section transversale perpendiculaire à l'axe longitudinal A, exécutée symétriquement, présente un axe de symétrie (15) dans la direction d'une hauteur maximale h et un axe de symétrie (16) dans la direction d'une largeur maximale b, où h est supérieure à b, **caractérisé en ce que** la forme de l'évidement (4), en vue en section transversale, est sensiblement ovale et qu'il présente comme surfaces de contact (6) quatre segments de surfaces espacés les uns des autres, s'étendant à peu près dans I& direction de l'axe longitudinal A, qui sont disposés symétriquement par rapport à la périphérie de l'évidement (4) d'une manière telle que le milieu M des droites qui relient les points initial et final de chaque segment de surface est à une distance normale b₁ de l'axe de symétrie (15) et à une distance normale h₁ de l'axe de symétrie (16), où h₁ est supérieure à b₁.
